# EUROPEAN PATENT SPECIFICATION

(11) **EP 1 009 246 B1**
(45) Date of publication and mention of the grant of the patent: **20.11.2002**
(21) Application number: 98946385.6
(22) Date of filing: 19.08.1998
(51) Int. Cl.: A23L 1/212, A23L 1/0524

(54) **PROCESS FOR TREATING FRUIT- OR VEGETABLE-BASED PRODUCT WITH PECTIN METHYLESTERASE AND ADDED PECTIN**
VERFAHREN ZUR BEHANDLUNG VON LEBENSMITTELPRODUKTEN AUF FRUCHT- ODER GEMÜSEBASIS MIT PEKTIN METHYLESTERASE UND ZUGESETZTEM PEKTIN
PROCEDE DE TRAITEMENT D'UN PRODUIT A BASE DE LEGUMES OU DE FRUITS AVEC ADJONCTION DE PECTINE METHYLESTERASE ET DE PECTINE

(30) Priority: 01.09.1997 EP 97306802
(43) Date of publication of application: 21.06.2000
(73) Proprietor: UNILEVER N.V., 3013 AL Rotterdam (NL); UNILEVER PLC, London EC4P 4BQ (GB)
(72) Inventor: GIDLEY, Michael, John, Unilever Research Colworth, Bedford MK44 1LQ (GB); GOTHARD, Michelle, Gina E., Unilever Rch. Colworth, Bedford MK44 1LQ (GB); WHITEMAN, Sally-Anne, Unilever Research Colworth, Bedford MK44 1LQ (GB); WOOLNER, Elizabeth, Mary, Van den Bergh Alimentos, CEP-38700-000 Patos de Minas (BR)
(74) Representative: Wurfbain, Gilles L.
(86) International application number: EP9805278
(87) International publication number: WO99011148

(56) References cited:
- WO-A-94/12055
- WO-A-96/11588
- WO-A-97/38592
- WO-A-98/47391

## Description

### Field of the Invention

The present invention relates to a process for the preparation of fruit- or vegetable-based products of high quality and consistency and to products obtained by this process.

### Background to the Invention

The texture of fruit- and vegetable-based products, such as purees and pastes, is usually considered to be a key determinant of their eating quality. Purees and pastes are prepared from whole fruit and vegetables by a combination of comminution and heating; the process conditions used are dependent on the raw material and the desired product attributes such as particle size, consistency and storage stability.

It is desirable to be able to produce fruit- or vegetable-based products having a high consistency and quality with a low solids content.

It is also desirable to be able to produce fruit- or vegetable-based products having a fresh, rather than a processed, flavour and/or aroma profile.

Fruits and vegetables contain pectins which are found in cell walls and comprise polygalacturonic acids esterified by methoxyl groups. Pectins are classified in accordance with the degree of esterification: pectins having greater than 50% esterification are called high-methoxylated pectins; pectins having less than 50% esterification are called low-methoxylated pectins.

Enzymes, such as polygalacturonase (PG) and pectinmethylesterase (PME), are naturally-present in fruit and vegetables. When a fruit or vegetable is comminuted, these enzymes are released and PME catalyses the removal of methyl ester groups from pectin, thereby producing pectic and pectinic acids which can associate with each other via cation cross-links to form a gel-like structure. However, PG rapidly depolymerises these pectic and pectinic acids, thereby offsetting any viscosity increase resulting from gelling. Consequently, the resulting product has a thin and watery consistency.

Heating a fruit or vegetable rapidly to above 80°C (eg 90-95°C) whilst it is being comminuted inactivates PME and PG, thereby preventing any significant breakdown of pectin during processing, such that a good consistency is maintained. For the purpose of the present invention, products prepared in this way are termed >PME-sensitive= because subsequent addition of PME (in the absence of PG) results in an increase in viscosity.

EP 0624062 discloses adding PME to crude or pretreated fruits or vegetables containing high-methoxylated pectin; this demethoxylates the high-methoxylated pectin to form low-methoxylated pectin which gelifies with added or naturally present calcium ions.

The severe heat treatment used to inactivate PME and PG when preparing >PME-sensitive= pastes leads to increased rates of chemical reactions including the Maillard reaction, which leads to the browning of products and the generation of off-flavours. Also, many important nutrient, colour and aroma compounds undergo chemical reactions or are driven off during heating.

In contrast, when a fruit or vegetable is comminuted at lower temperatures (eg 60-70°C), there is less heat damage and better retention of important nutrient, colour and aroma - compounds. However, at these lower temperatures the enzymes PG and PME are active and break down pectin, resulting in a product having a poor consistency. For the purpose of the present invention, products prepared in this way are termed >PME-insensitive= because the subsequent addition of PME (in the absence or presence of PG) does not result in any significant thickening as the pectin has already been substantially demethoxylated.

The present invention seeks to provide a process for increasing the consistency and manipulating the texture of fruit- or vegetable-based products having a low solids content. Preferably, the products have flavour/aroma profiles and colours which are perceived as fresher than conventionally processed products with comparable consistencies.

### Summary of the Invention

According to the present invention there is provided a process for preparing a fruit- or vegetable-based product comprising the following steps:
a) adding pectinmethylesterase and pectin to a pectinmethylesterase-insensitive fruit or vegetable paste;
b) incubating the paste with the pectinmethylesterase and the pectin;
c) optionally inactivating the pectin methylesterase.

The added pectin and pectinmethylesterase are preferably substantially free from pectin depolymerising enzymes such as pectin lyases and polygalacturonases.

A fruit- or vegetable-paste is, for example, chopped, diced, comminuted or macerated fruit or vegetables. It therefore includes fruit or vegetable pieces having a size in the range of from approximately 10 mm to approximately 3cm.

A PME-sensitive paste is one which shows an increase in viscosity of greater than 1000 Pa in (G') storage modulus value at 12°Brix when about 265 units of PME activity are added to 100g of paste.

A PME-insensitive paste is one which shows an increase in viscosity of less than 1000 Pa in G' value at 12°Brix when about 265 units of PME activity are added to 100g of paste.

Preferably the process conditions are chosen such that the paste increases in consistency but does not substantially gel.

At the end of the process the G' value of the paste has preferably increased by more than 1000 Pa and less than 3000 Pa at 12° Brix.

The extent of consistency increase can be controlled by the amount of pectin added, the amount of PME added and the incubation conditions.

A final inactivation step is optional: for example, if a desired consistency is reached at the time that the reaction has reached effective completion then a final inactivation step is not required. This can be the case when the amount of pectin added limits the reaction. However, if the reaction has not reached effective completion at the time that the desired consistency has been reached, the PME is inactivated to prevent any further increase in consistency.

The controlled addition of PME may be achieved by titrating a solution of PME extract into the fruit- or vegetable-paste or adding PME extract in the form of a powder. Using an extract of PME allows control of the amount of PME added, since it is assayable. Also, it is easily dosed. Hence, the level of PME activity in the paste is easily pre-determined.

A suitable source for PME is any vegetable or fruit from which it can be extracted. For example, green beans, snap beans, potatoes, cauliflowers, sour cherries, green tomatoes, green peppers, oranges, apples, bananas, pears, turnips, onions, garlic and mixtures thereof. Immature fruit and vegetables are preferred. Particularly preferred sources are green tomatoes, green peppers, green beans and snap beans.

The most preferred source of PME is green tomatoes, as they contain high levels of PME and insignificant (ie undetectable) levels of PG.

PME may be extracted from green tomatoes by stabilising green tomatoes or pieces thereof and extracting pectin methylesterase therefrom. The stabilised green tomatoes and pieces thereof are ambient stable and convenient to use.

Preferably, the extract of PME is a solution or powder for practical and controlled dosing into paste.

The pectin may be sourced from fruit, vegetables and mixtures thereof. It is preferably sourced from tomatoes, apples or citrus fruits. It may be added in the form of a serum extracted from a fruit or vegetable paste which is PME-sensitive. It may also be added as a solid or a solution of pre-extracted pectin obtained from commercial suppliers.

The pectin and the PME extract are added to the paste, optionally with any other ingredients. The mixture is then incubated to activate the enzyme and allow it to demethoxylate the added pectin, resulting in an increase in viscosity. Different pastes take different lengths of time to respond to the same amount of PME activity at the same temperature of incubation. Once the desired consistency (thickness) has been achieved, the PME is optionally inactivated by, for example, heating, adjusting pH, and/or adding inhibitors. If heating is used, the temperature is typically raised to 90°C for 10 minutes.
The paste treated in accordance with the present invention is preferably a tomato paste.

A tomato paste which is PME-insensitive is one which may be prepared using a >cold-break= process. In one example of a cold-break process, raw tomatoes are chopped and fed into a vessel provided with steam coils (or steam jackets) and a rotating blade assembly for agitating the material in the vessel, such that good heat transfer is obtained. The cold-break process is typically conducted at a temperature of less than 80°C, preferably from 60 to 70°C.

A tomato paste which is PME-sensitive is one which may be prepared using a >hot-break= process. In one example of a hot-break process, the cold break process described above is used, except that the hot-break process is typically conducted at a temperature greater than 80°C, preferably from 85 to 95°C.

The fruit- or vegetable-paste prepared using the process of the present invention can be sold as it is, or can be used as the ingredient of products, such as sauces, ketchup, pizza toppings and soups.

By selecting the right conditions for steps a, b and c of the present invention, it is possible to improve the viscosity and/or texture of fruit- or vegetable-pastes, whilst preferably retaining their fresh colour, flavour and aroma.

Examples of the products and processes of the invention will now be described to illustrate, but not to limit, the invention, with reference to the accompanying figures, in which:
figure 1 is a graph of time (mins) (x axis) against G'(Pa) (y axis) for five pastes;
figure 2 is a graph of time (mins) (x axis) against G'(Pa) (y axis) for three pastes; and
figure 3 is a graph of time (mins) (x axis) against G'(Pa) (y axis) for three pastes.

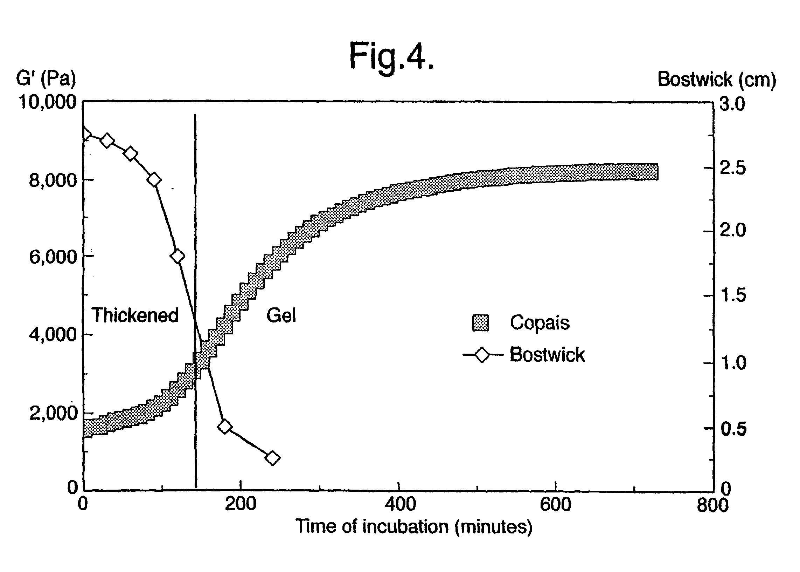

figure 4 is a graph of Bostwick value and G' value for a hot break tomato paste incubated with PME.
figure 5 shows the Bostwick and blotter results over time on the paste of figure 4.
figure 6 is a 2-hour strain response curve.
figure 7 gives the strain dependence of the paste of figure 4.

In all these figures, the G' values are expressed as an increase in G' from the start of incubation.

### Detailed Description of the Invention

### Preparation of PME-containing extracts:

Mature green tomatoes (without any signs of colour change) were harvested. The tomatoes were quartered and the seeds and locular contents removed. The pericarp tissue was either used immediately or frozen in liquid nitrogen and stored at -20/C until required for use. A known weight of pericarp was taken and an equal volume of 2M NaCl was added (i.e. if 100g pericarp was taken, then 100ml of salt solution was used). The pericarp was homogenised in a blender, stirred at 4/C for 2 hours and centrifuged (27,000 x *g*, 30 minutes, 4/C). The supernatant was collected and strained through muslin. The supernatant (ie pericarp salt extract) was stored at -20/C in small aliquots until required. The PME activity of the pericarp salt extract was determined by titration of a 1% pectin solution with 25 mM NaOH at pH 7.5 and 30/C. Units of activity are expressed as :moles COO⁻ generated/min.

### Preparation of PME-sensitive paste:

Tomato paste which was sensitive to PME addition was prepared in the laboratory using a domestic microwave oven. Two tomatoes were heated for 3.5 mins, comminuted and heat-pasteurised. The resulting paste was then separated via centrifugation into serum and pellet. Paste of a suitable consistency was prepared by recombining the pellet with a suitable volume of the serum.

### Preparation of PME-insensitive paste:

This was prepared in the same way as for PME-sensitive paste, except that the two tomatoes were heated for 1.5 mins in a microwave oven.

### General measurement techniques:

Small deformation rheology: a small amount (approx 3g) of paste was placed between parallel plates on a rheometer, model RDA2 available from Rheometrics, the plates being 5cm in diameter and roughened by attachment of emery paper to the plate surfaces to reduce slippage or surface friction phenomena. Time sweep measurements were made at 0.5% strain, 10 rads⁻¹ at 30/C. All samples were sealed with liquid paraffin to avoid desiccation or water exchange.

Bostwick measurements: these were made in a standard Bostwick viscometer. Paste was placed in the chamber of the levelled Bostwick, the shutter opened and the timing clock started. The distance (in centimetres) over which the paste flowed in 30 seconds was recorded. Pastes with a low Bostwick value have a high viscosity and *vice versa.*

Serum:pellet ratios: these were determined by placing a weighed amount of each paste into a centrifuge tube, centrifuging at 5,000 - 10,000 x *g* for 30 minutes, pouring off the serum, and recording the weights of the serum and the pellet. From these values the serum to pellet ratio was calculated.

Serum viscosity: a Low Shear 30 Rheometer obtained from Contraves in Switzerland was used to measure the serum viscosity. A small amount of serum was prepared in the same way as for measuring serum:pellet ratios. The serum was placed in a cup-and-bob apparatus of the rheometer and a range of shear rates was used to determine the viscosity at zero shear.

Dry weight: a sample of the paste or serum was placed into a pre-weighed glass vial and the filled vial was weighed again. Three vials were set up for each sample. The filled vials (without lids) were placed in a vacuum oven at 80/C for three days and were then weighed again. After subtraction of the weight of the vial, the total weight and dry weight of the sample was calculated, and then the dry weight expressed as a percentage of the total weight was calculated.

/Brix measurements: these values reflect the content of soluble sugars in the serum fraction by determination of refractive index. The measurements were made using a RFM 320 Refractometer (from Bellingham and Stanley Ltd), calibrated against distilled water. A sample of tomato paste was squeezed through filter paper and two or three drops of serum placed on the measurement surface of the refractometer. The value measured by the Refractometer was recorded.

### Comparative Example A.

2.5% (v/w) of salt extract from green tomato pericarp (which contains 265 Units of PME activity) was added to PME-sensitive paste. The paste was incubated with the PME for 250 mins at 30°C by placing it between two plates of a rheometer. Structuring was monitored by small deformation rheology.

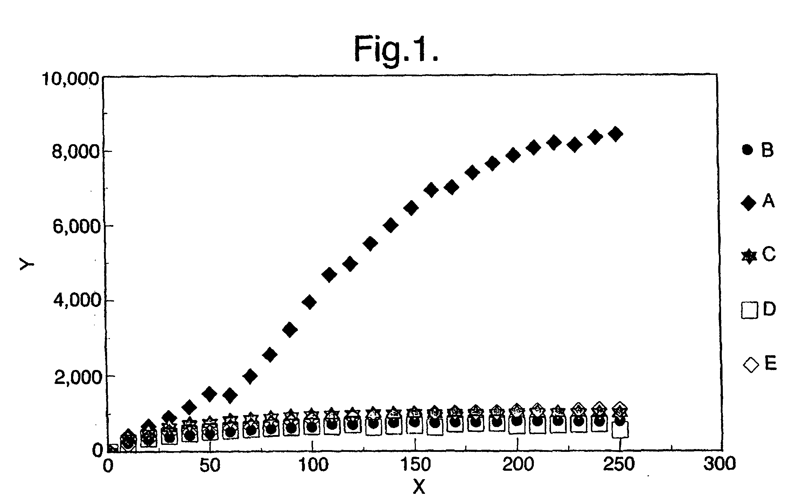

The results are plotted (line A) in Figure 1 from which it can be seen that this paste rapidly increased in G= values over the time of incubation.

### Comparative Example B

PME-sensitive paste was incubated for 250 minutes at 30°C in the absence of added PME by placing it between two plates of a rheometer. Structuring was monitored by small deformation rheology.

The results are plotted (line B) in Figure 1 from which it can be seen that this paste did not show any significant changes in G= values over the time of incubation.

### Comparative Example C

The serum from PME-sensitive paste was removed from the paste and replaced by water. The serum was removed by placing a weighed amount of paste into a centrifuge tube, centrifuging at 5,000 - 10,000 x *g* for 30 minutes, pouring off the serum, resuspending the pellet in water and re-centrifuging twice to ensure-complete removal of all serum. The resulting washed paste was incubated for 250 minutes at 30°C in the absence of added PME by placing it between two plates of a rheometer. Structuring was monitored by small deformation rheology.

The results are plotted (line C) in Figure 1 from which it can be seen that the washed paste did not show any significant changes in G= values over the time of incubation.

### Comparative Example D

2.5% (v/w) of salt extract from green tomato pericarp (which contains 265 Units of PME activity) was added to the washed paste of comparative example C. The paste was incubated with the PME for 250 mins at 30°C by placing it between two plates of a rheometer. Structuring was monitored by small deformation rheology.

The results are plotted (line D) in Figure 1 from which it can be seen that the addition of PME to the washed paste did not show any significant changes in G= values over the time of incubation.

### Comparative Example E

The method of comparative example D was repeated, but with the extra step of adding calcium (6mM) to the washed paste.

The results are plotted (line E) in Figure 1 from which it can be seen that the addition of PME and calcium to the washed paste did not show any significant changes in G= values over the time of incubation

### Conclusions

These comparative examples illustrate that adding PME to PME-sensitive pastes increases the viscosity of the pastes. They also show that it is the serum polymers which are critical in permitting this PME-mediated structuring.

### Example 1

265 units of PME activity per 100g of paste were added to a PME-insensitive paste comprising 10g of PME-insensitive pellet and 10ml of PME-insensitive serum. The paste was incubated with the PME for up to 800 mins at 30°C. Structuring was monitored by a time sweep performed on an RDA2 Rheometrics system.

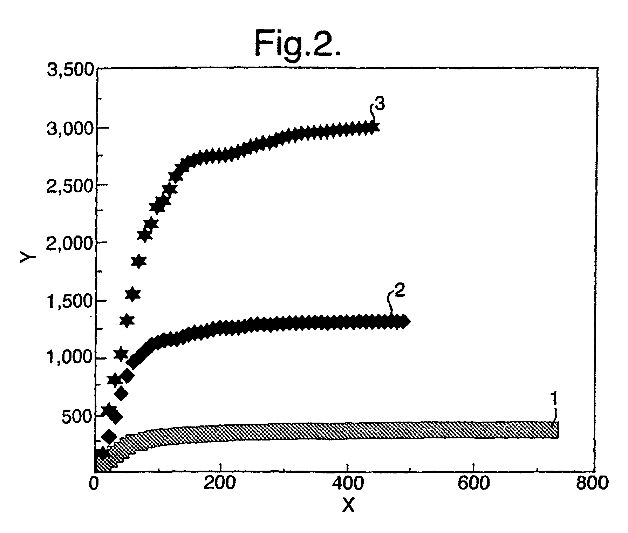

The results are plotted (line 1) in Figure 2 from which it can be seen that this PME-insensitive paste showed no significant increase in G= values (ie less than 1000 Pa) over the time of incubation.

### Example 2

The method of example 1 was repeated except that the PME-insensitive serum was replaced by PME-sensitive serum.

The results are plotted (line 2) in Figure 2 from which it can be seen that there was a significant increase in G= values over the time of incubation, showing that the paste was sensitive to the action of PME.

At the end of the incubation period, although consistency had increased, no gel had been formed.

### Example 3

The method of example 2 was repeated, except that the PME-sensitive serum used was 8 times more concentrated than the PME-sensitive serum of example 2.

The results are plotted (line 3) in Figure 2 from which it can be seen that there was a significant increase in G= values over the time of incubation and that the extent of structuring (maximum G= value) was greater than in example 2.

The material produced was a weak gel. This indicates that it is possible to control the level of structuring by the amount of PME-sensitive serum added to the system.

### Example 4

The method of example 1 was repeated using a different batch of PME-insensitive paste.

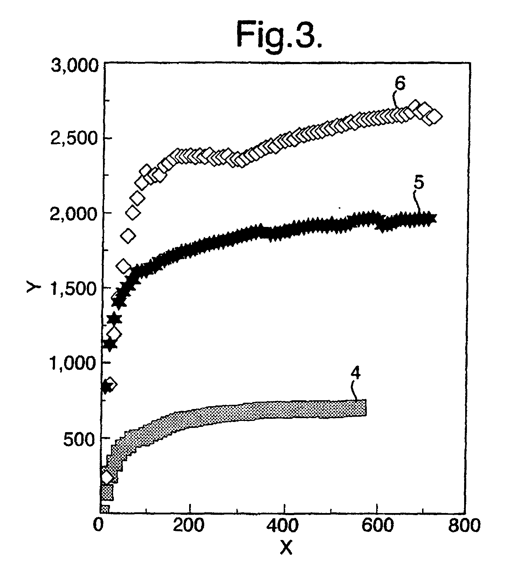

The results are plotted (line 4) in Figure 3 from which it can be seen that this paste showed an increase in G= values of less than 1000 Pa over the time of incubation.

### Example 5

The method of example 4 was repeated except that the PME-insensitive serum was replaced by a 0.5% solution of commerical pectin (with a degree of esterification of 37%).

The results are plotted (line 5) in Figure 3 from which it can be seen that there was a significant increase in G= values over the time of incubation.

### Example 6

The method of example 4 was repeated except that the PME-insensitive serum was replaced by a 1.0% solution of commerical pectin (with a degree of esterification of 37%) .

The results are plotted (line 6) in Figure 3 from which it can be seen that there was a significant increase in G= values over the time of incubation and that the extent of structuring (maximum G= value) was greater than for example 5.

This indicates that the addition of pectin permits PME-mediated structuring and that it is possible to control the level of structuring by the amount of pectin added to the system.

### Example 7

Differentiation between thickened and gelled tomato paste after PME treatment.

Blotter, Bostwick and rheological time sweep measurements: as above.

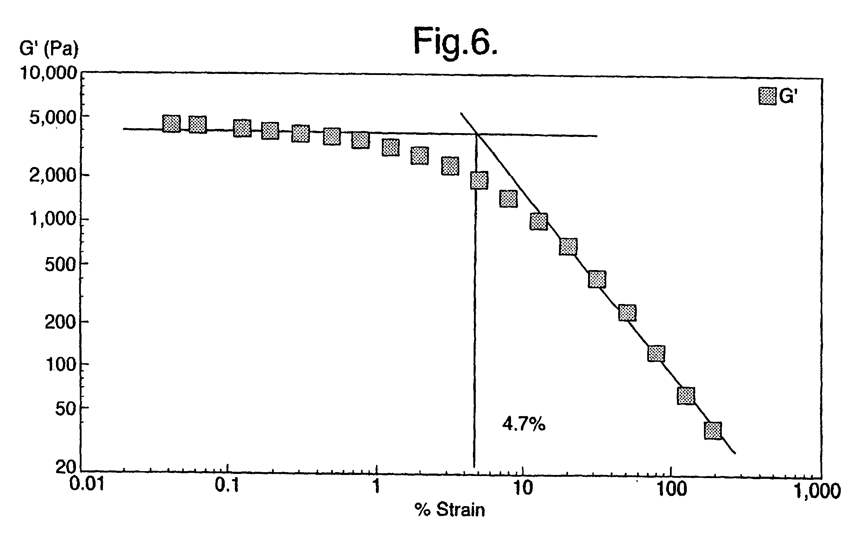

Strain sweep: hot break tomato paste (Copais) at 13° Brixwas treated with 2.5% PME extract and placed onto a Rheometrics RDA II strain controlled rheometer equiped with a 50 mm diameter parallel plates. Emery paper was attached to the plates with cyanoacrylate glue to reduce sample slippage. Samples were sealed in with liquid paraffin to stop water exchange. Experiments were carried out at an incubation temperature of 30°C. For all experiments, except time zero, the structuring of the treated sample was followed with a rheological time sweep. The conditions of this measurement were: frequency 1Hz, temperature 30°C and a strain range of 0.5-200%. The value for strain dependence was determined from the slope intersects of a plot of stress to strain (figure 6).

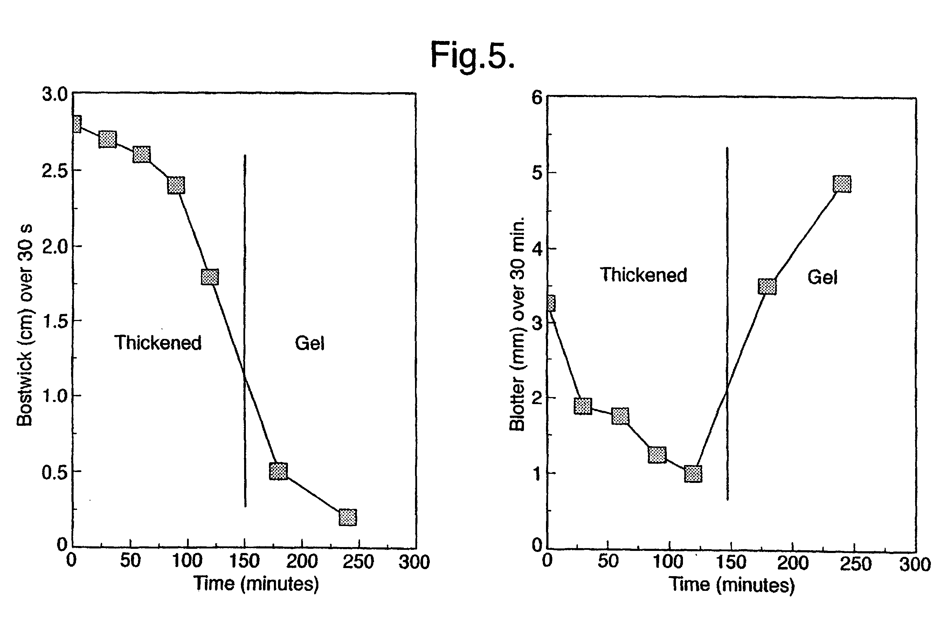

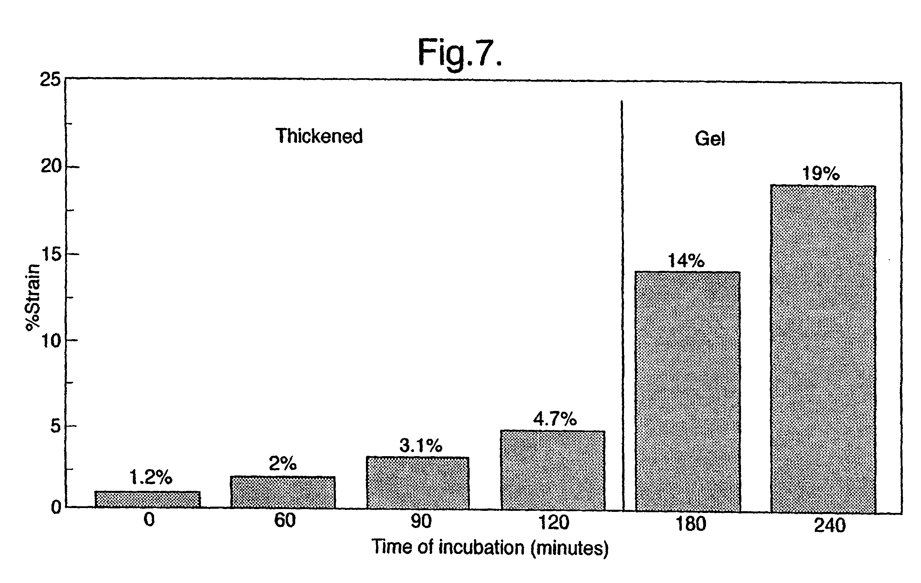

Figure 5 shows the Bostwick and blotter values for 13° Brix hot break paste (Copais) as a function of time of incubation. Paste which is thickened shows a gradual decrease in Bostwick and Blotter. For this particular example the maximum thickenening was achieved at 2 hours. Beyond this time the blotter rapidly increases indicating gross syneresis in the product and the Bostwick becomes effectively zero. At this poit the paste has become a continuous gel. If the Bostwick behaviour is plotted relative to the rheological time sweep for the same PME treatment it can be seen that the estimated gel point corresponds to a G' value of around 3000 Pa. Gel formation is occurring during the rapid structuring phase of the time sweep. The strain dependence value also shows a distinct step change between 2 and 3 hours (figure 7). Up to 2 hours the linear region of the strain response is relatively short (figure 6) and the dependence values do not exceed 8%. Between 2 and 3 hours the onset of gel formation is accompanied by an increase in strain dependence to 14%, and the strain response plots have increased linar regions indicating a greatly increased resistance to breadown and flow. It is therefore possible to define physical and instrumental characteristics which differentiate between a gel network (strain dependence of >8%, as defined in figure 6) and a thickened system of increased consistency (starin dependence <8%.

## Claims

1. A process for preparing a fruit- or vegetable-based product comprising the following steps:
a) adding pectinmethylesterase and pectin to a pectinmethylesterase insensitive fruit or vegetable paste, that has been prepared by comminuting the fruit or vegetable at temperatures below 80 degrees C.
b) incubating the paste with the pectinmethylesterase and the pectin;
c) optionally inactivating the pectin methylesterase.

2. A process as claimed in claim 1 wherein the added pectin and pectinmethylesterase are substantially free from pectin depolymerising enzymes.

3. A process as claimed in any preceding claim wherein; at the end of the process, the paste has increased in consistency but has not substantially gelled.

4. A process as claimed in any preceding claim wherein, at the end of the process, the storage modulus (G') value of the paste has increased by more than 1000 Pa and less than 3000 Pa at 12° Brix.

5. A process as claimed in any preceding claim wherein the paste is a tomato paste.

6. A process as claimed in claim 5, wherein the pectinmethylesterase-insensitive paste is prepared using a cold break process.

7. A process as claimed in any preceding claim wherein the pectinmethylesterase is sourced from a vegetable, fruit or mixture thereof.

8. A process as claimed in any preceding claim wherein the pectin is sourced from a vegetable, fruit or mixture thereof.

9. A process as claimed in claim 8 wherein the pectin is in the form of a serum extracted from a pectinmethylesterase-sensitive fruit or vegetable paste, that has been prepared by comminuting the fruit or vegetable at a temperature above 80°C.

## Patentansprüche

1. Verfahren zur Herstellung eines Produktes auf Fruchtoder Gemüsebasis, umfassend die folgenden Schritte:
a) Zusetzen von Pektinmethylesterase und Pektin zu einer gegenüber Pektinmethylesterase unempfindlichen Frucht- oder Gemüse-Paste, die durch Zerkleinern der Frucht oder des Gemüses bei Temperaturen unter 80 °C hergestellt worden war;
b) Inkubieren der Paste mit der Pektinmethylesterase und dem Pektin;
c) gegebenenfalls Inaktivieren der Pektinmethylesterase.

2. Verfahren nach Anspruch 1, wobei das zugesetzte Pektin und die zugesetzte Pektinmethylesterase im wesentlichen frei von Pektin depolymerisierenden Enzymen sind.

3. Verfahren nach einem der vorangehenden Ansprüche, wobei die Paste am Ende des Verfahrens eine erhöhte Konsistenz hat, aber im wesentlichen nicht geliert ist.

4. Verfahren nach einem der vorangehenden Ansprüche, wobei am Ende des Verfahrens der Wert des Lagermoduls (G') der Paste um mehr als 1000 Pa und um weniger als 3000 Pa bei 12 Brixgraden erhöht ist.

5. Verfahren nach einem der vorangehenden Ansprüche, wobei die Paste eine Tomatenpaste ist.

6. Verfahren nach Anspruch 5, wobei die gegenüber Pektinmethylesterase unempfindliche Paste unter Verwendung eines Kaltzerkleinerungsverfahrens hergestellt ist.

7. Verfahren nach einem der vorangehenden Ansprüche, wobei die Pektinmethylesterase von einem Gemüse, einer Frucht oder Gemischen derselben stammt.

8. Verfahren nach einem der vorangehenden Ansprüche, wobei das Pektin von einem Gemüse, einer Frucht oder Gemischen derselben stammt.

9. Verfahren nach Anspruch 8, wobei das Pektin in Form eines Serums vorliegt, das aus einer gegenüber Pektinmethylesterase empfindlichen Frucht- oder Gemüse-Paste extrahiert wird, die durch Zerkleinern der Frucht oder des Gemüses bei einer Temperatur über 80 °C hergestellt worden ist.

## Revendications

1. Procédé de préparation d'un produit à base de fruits ou de légumes comportant les étapes suivantes :
a) l'ajout de pectine méthylestérase et de pectine à une purée de fruits ou de légumes insensible à la pectine méthylestérase, purée qui a été préparée en hachant finement les fruits ou les légumes à des températures inférieures à 80°C ;
b) l'incubation de la purée avec la pectine méthylestérase et la pectine ;
c) éventuellement, l'inactivation de la pectine méthylestérase.

2. Procédé selon la revendication 1 dans lequel la pectine et la pectine méthylestérase ajoutées sont pratiquement exemptes d'enzymes dépolymérisant la pectine.

3. Procédé selon l'une quelconque des revendications précédentes dans lequel, à la fin du procédé, la purée a augmenté en consistance mais n'a pas substantiellement gélifié.

4. Procédé selon l'une quelconque des revendications précédentes dans lequel, à la fin du procédé, la valeur du module de conservation (G') de la purée a augmenté de plus de 1000 Pa et de moins de 3000 Pa à 12° Brix.

5. Procédé selon l'une quelconque des revendications précédentes dans lequel la purée est une purée de tomate.

6. Procédé selon la revendication 5, dans lequel la purée insensible à la pectine méthylestérase est préparée au moyen d'un procédé de pressage à froid.

7. Procédé selon l'une quelconque des revendications précédentes dans lequel la pectine méthylestérase provient d'un légume, d'un fruit ou d'un mélange des précédents.

8. Procédé selon l'une quelconque des revendications précédentes dans lequel la pectine provient d'un légume, d'un fruit ou d'un mélange des précédents.

9. Procédé selon la revendication 8 dans lequel la pectine se trouve sous la forme d'un sérum extrait d'une purée de fruits ou de légumes insensible à la pectine méthylestérase, purée qui a été préparée en hachant finement les fruits ou les légumes à une température supérieure à 80°C.
